# EUROPÄISCHE PATENTSCHRIFT

(11) **EP 0 852 561 B1**
(45) Veröffentlichungstag und Bekanntmachung des Hinweises auf die Patenterteilung: **19.05.1999**
(21) Anmeldenummer: 96943005.7
(22) Anmeldetag: 20.09.1996
(51) Int. Cl.: B65G 47/14

(54) **VORRICHTUNG ZUM SPEICHERN UND VEREINZELN VON ALS SCHÜTTGUT AUFNEHMBAREN TEILEN**
DEVICE FOR STORING AND ISOLATING COMPONENTS WHICH CAN BE ACCOMMODATED AS BULK MATERIAL
DISPOSITIF POUR STOCKER ET SEPARER DES COMPOSANTS POUVANT ETRE RECUEILLIS SOUS FORME DE PRODUIT EN VRAC

(30) Priorität: 27.09.1995 DE 19535956
(43) Veröffentlichungstag der Anmeldung: 15.07.1998
(73) Patentinhaber: SIEMENS AKTIENGESELLSCHAFT, 80333 München (DE)
(72) Erfinder: LINTNER, Albert, D-83714 Miesbach (DE)
(86) Internationale Anmeldenummer: DE9601790
(87) Internationale Veröffentlichungsnummer: WO9711900

(56) Entgegenhaltungen:
- DE-A- 3 327 884
- DE-B- 1 025 239
- DE-C- 156 423

## Beschreibung

Die Erfindung betrifft eine Vorrichtung zum Speichern und Vereinzeln von als Schüttgut aufnehmbaren Teilen, insbesondere von kubischen oder zylindrischen elektronischen Bauteilen, nach dem Oberbegriff des Anspruchs 1.

Für die automatische Bestückung von Leiterplatten oder Keramiksubstraten mit SMD-Bauelementen, wie Widerständen, Kondensatoren, Dioden, Transistoren und dergleichen, werden Bestückautomaten eingesetzt, die beispielsweise nach dem sogenannten Pick & Place Prinzip arbeiten. Die Zuführung der Bauelemente richtet sich dabei nach ihrem Anlieferungszustand. So stehen beispielsweise für Schüttgut, für Magazine und für Gurte entsprechende Zuführmodule zur Verfügung. Über diesen Zuführmodulen und der im Bestückbereich ortsfest zentrierten Leiterplatte oder einem im Bestückbereich ortsfest zentrierten Keramiksubstrat, bewegt sich ein Bestückkopf, der an eine frei programmierbare Positioniereinheit angeflanscht ist. Der Bestückkopf nimmt die Bauelemente an den Entnahmepositionen der Zuführmodule mit Hilfe einer Saugpipette auf, worauf das jeweils aufgenommene Bauelement in die Einbaulage gedreht und in der vorgesehenen Bestückposition auf der Leiterplatte oder dem Keramiksubstrat abgesetzt wird. Anschließend werden die derart bestückten Substrate zum Reflow-Löten weitergegeben, wobei die Oberflächenmontage der Bauelemente insbesondere durch die Dampfphasenlötung abgeschlossen wird.

Für die als besonders wirtschaftlich einzuordnende Bereitstellung der Bauteile als Schüttgut, werden Vorrichtungen eingesetzt, die einen Vorratsbehälter zur Aufnahme des Schüttguts und einen sich an den Auslaß des Vorratsbehälters anschließenden Ausrichtkanal umfassen. Der Querschnitt des Ausrichtkanals entspricht mit einem geringen Übermaß dem Querschnitt der Bauteile. Der Eintrittsquerschnitt des Ausrichtskanals ist also derart auf die Form und Größe der Bauteile abgestimmt, daß diese nur in der richtigen Lage und nacheinander eintreten und zu einer Entnahmeposition transportiert werden können. Der Transport der Bauteile zur Entnahmeposition kann beispielsweise durch die Ausgestaltung des Transportweges als Schwerkraftförderer, als Vibrationsförderer oder als Blasluftförderer vorgenommen werden. Im Eintrittsbereich des Ausrichtkanals kann es zu einem Stau falsch liegender Bauteile kommen, der bereits durch ein einziges Bauteil ausgelöst werden kann, welches den Eintrittsquerschnitt des Ausrichtkanals blockiert. Der Stau kann aber auch durch eine Brückenbildung zweier oder mehrerer Teile ausgelöst werden, die sich im Auslaßbereich des Vorratsbehälters zwischen den Wänden verklemmen.

Aus der EP-B-0 216 203 ist es bekannt, bei einer Vorrichtung der eingangs genannten Art einen Stau im Eintrittsbereich des Ausrichtkanals durch die Einleitung eines Gases aufzulösen, so daß richtig liegende Teile nachrücken und in den Ausrichtkanal eintreten können.

Aus der DE-C-39 42 996 bzw. DE-A-37 17 918 ist es bekannt, bei einer Vorrichtung der eingangs genannten Art dem Eintrittsbereich des Ausrichtkanals einen Querschnitt zu verleihen, der außerhalb seiner eben ausgebildeten Bodenfläche durch eine weder parallel, noch rechtwinklig zur Bodenfläche verlaufende Wandfläche begrenzt wird. Durch diese Querschnittsform sollen flächige Berührungen der Bauteile mit den Wandflächen und damit auch Brückenbildungen der Bauteile vermieden werden.

Nach der DE-C-0 156 423 ist eine Vereinzelungsvorrichtung für Schüttgut aus einem Vorratsbehälter bekannt geworden, bei der der trichterförmige Vorratsbehälter in einen Übergangsabschnitt mit parallelen Seitenwänden mündet, der seinerseits in einen Abführkanal übergeht. Einer der parallelen Seitenwände ist beweglich ausgebildet und ragt in den Übergangsabschnitt hinein. Durch die hin- und herbewegbare Seitenwand wird das Vereinzeln der Teile begünstigt, was jedoch einen zusätzlichen Antrieb für die Vereinzelungsvorrichtung erfordert.

Bei den bekannten Vorrichtungen zum Speichern und Vereinzeln von als Schüttgut aufnehmbaren Teilen beruht die Vereinzelung der Bauteile durch einen lagerichtigen Eintritt in den Ausrichtkanal auf dem Zufallsprinzip. Damit ergeben sich aber auch sehr lange Füllzeiten für den Bereich zwischen dem Eintritt des Ausrichtkanals und der Entnahmeposition für die Bauteile. Andererseits kann es bei der Einleitung eines Gases zur Auflösung von Staus oder Brückenbildungen durch den erforderlichen hohen Gasdruck in der Wirbelkammer zu Beschädigungen der Bauteile kommen.

Der Erfindung liegt die Aufgabe zugrund, eine Vorrichtung zum Speichern und Vereinzeln von als Schüttgut aufnehmbaren Teilen zu schaffen, bei welcher eine schonende und sichere Vereinzelung der Teile gewährleistet ist.

Diese Aufgabe wird bei einer Vorrichtung nach Anspruch 1 gelöst.

Der Erfindung liegt die Erkenntnis zugrunde, daß eine trichterförmige Ausgestaltung des Auslaßbereichs des Vorratsbehälters die Vereinzelung der Teile stark begünstigt, falls eine bestimmte Trichtergeometrie vorliegt. Der trichterförmige Auslaßbereich des Vorratsbehälters bildet dabei einen Einlaßtrichter für den Ausrichtkanal, der zwei paralle zueinander ausgerichtete und stufenlos in den Ausrichtkanal übergehende Trichterwände besitzt. Hiermit ist der Abstand zwischen den beiden parallelen Trichterwänden mit geringem Übermaß auf den Querschnitt der zu vereinzelnden Teile abgestimmt, so daß die Teile im Trichterbereich in ihrer Höhe vororientiert sind. Da sich die Teile im Trichterbereich nicht mehr aufstellen können, gelangen sie unter Beibehaltung ihrer vororientierten Lage zum Ausrichtkanal, in den sie dann nacheinander problemlos eintreten können.

Vorteilhafte Ausgestaltungen der Erfindung sind in den Ansprüchen 2 bis 4 angegeben.

Die Ausgestaltung nach Anspruch 2 ermöglicht eine schonende Auflösung eventuell noch eintretender Staus der Teile vor dem Eintritt in den Ausrichtkanal.

Die Weiterbildung nach Anspruch 3 begünstigt durch die vertikale Ausrichtung des Einlaßtrichters die Zufuhr der Teile zum Ausrichtkanal.

Gemäß Anspruch 4 ist es auch besonders günstig, wenn der Einlaßbereich des Ausrichtkanals in vertikaler Richtung verläuft, und die Teile somit duch Einwirkung der Schwerkraft abtransportiert werden.

Ein Ausführungsbeispiel der Erfindung ist in der Zeichnung dargestellt und wird im folgenden näher beschrieben.

Es zeigen
- Figur 1: bei einer Vorrichtung zum Speichern und Vereinzeln von als Schüttgut aufnehmbaren Teilen den Übergangsbereich zwischen Vorratsbehälter und Ausrichtkanal in perspektivischer Darstellung,
- Figur 2: einen ersten Längsschnitt durch den Übergangsbereich gemäß Figur 1,
- Figur 3: einen zweiten Längsschnitt durch den Übergangsbereich gemäß Figur 1,
- Figur 4: eine perspektivische Darstellung einer Vorrichtung zum Speichern und Vereinzeln von als Schüttgut aufnehmbaren Teilen und
- Figur 5: denjenigen Teil der in Figur 4 dargestellten Vorrichtung, der den in den Figuren 1 bis 3 schematisch dargestellten Übergangsbereich zwischen Vorratsbehälter und Ausrichtkanal enthält.

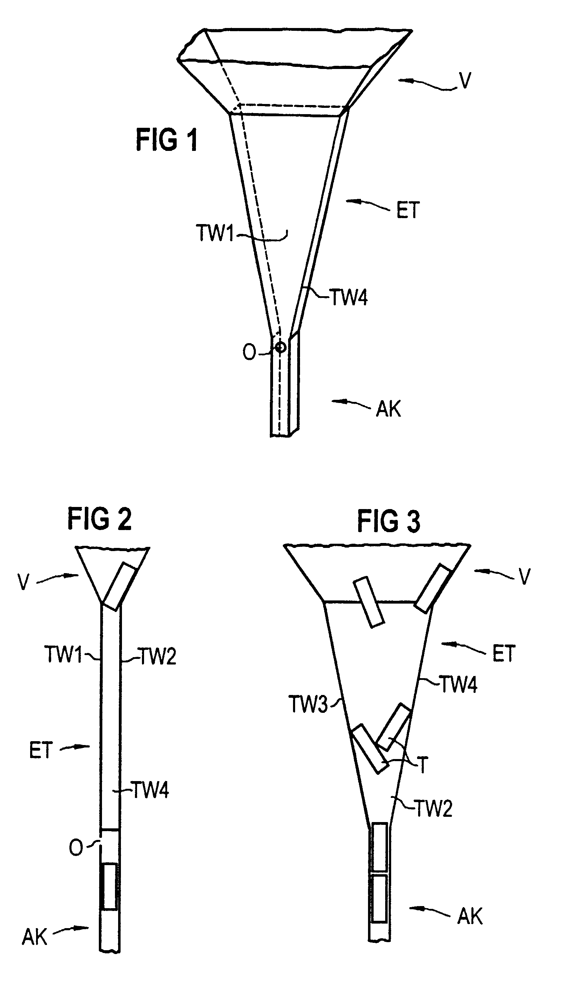

Die Figuren 1 bis 3 zeigen in stark vereinfachter schematischer Darstellung die Geometrie eines mit ET bezeichneten Einlaßtrichters, der sich zwischen dem unteren Ende eines Vorratsbehälters V und einem Ausrichtkanal AK erstreckt. Der zur Aufnahme von Teilen T in Form von Schüttgut dienende Vorratsbehälter V ist in seinem unteren Bereich trichterförmig ausgebildet. Der unmittelbar an die vier trichterförmig geneigten Wände des Vorratsbehälters V angrenzenden Einlaßtrichter ET umfaßt zwei parallel zueinander ausgerichtete, trapezförmige Trichterwände TW1 und TW2, sowie zwei geneigte, rechteckförmige Trichterwände TW3 und TW4. Die lichte Weite der beiden parallel zueinander ausgerichteten Trichterwände TW1 und TW2 entspricht der lichten Weite des im Querschnitt quadratischen Ausrichtkanals AK. Die beiden Trichterwände TW1 und TW2 liegen dabei mit den angrenzenden Wänden des Ausrichtkanals AK in einer Ebene, so daß hier ein Übergang ohne Stufe und ohne Knick vorliegt. Da der Querschnitt des Ausrichtkanals AK mit geringem Übermaß dem Querschnitt der zu vereinzelnden Teile T entspricht, können die Teile T nur in einer in ihrer Höhe vororientierten Lage in den Einlaßtrichter ET eintreten. Dementsprechend kann dann auch der Übertritt in den Ausrichtkanal AK ohne größere Lageänderungen der Teile T vor sich gehen. Im Einlaßbereich des Ausrichtkanals AK ist eine Öffnung O vorgesehen, in welche zur Beseitigung eines eventuell auftretenden Staus der Teile T ein Gas, vorzugsweise Luft, einleitbar ist. Beim Vereinzeln von elektronischen Bauteilen wird durch die Öffnung O gepulste Luft mit Pulszeiten von beispielsweise 60ms eingeleitet. Der Luftdruck ist dabei so gering, daß eine Beschädigung der Bauteile mit Sicherheit ausgeschlossen werden kann.

Der Vorgang der Vereinzelung ist insbesondere aus den Figuren 2 und 3 ersichtlich. Die in dem Vorratsbehälter V in Form von Schüttgut aufgenommenen Teile T gelangen durch die trichterförmige Verjüngung in den Einlaßtrichter ET, dessen geneigte Trichterwände TW3 und TW4 die Teile T gezielt zum Eintritt des Ausrichtkanals AK hinführen. Die Teile T sind dabei durch die beiden parallelen Trichterwände TW1 und TW2 in ihrer Höhe bereits vororientiert. Da sowohl der Einlaßtrichter ET, als auch der Anfangsbereich des Ausrichtkanals AK vertikal ausgerichtet sind, gelangen die Teile T durch Einwirkung der Schwerkraft nacheinander und lagerichtig in den Ausrichtkanal AK.

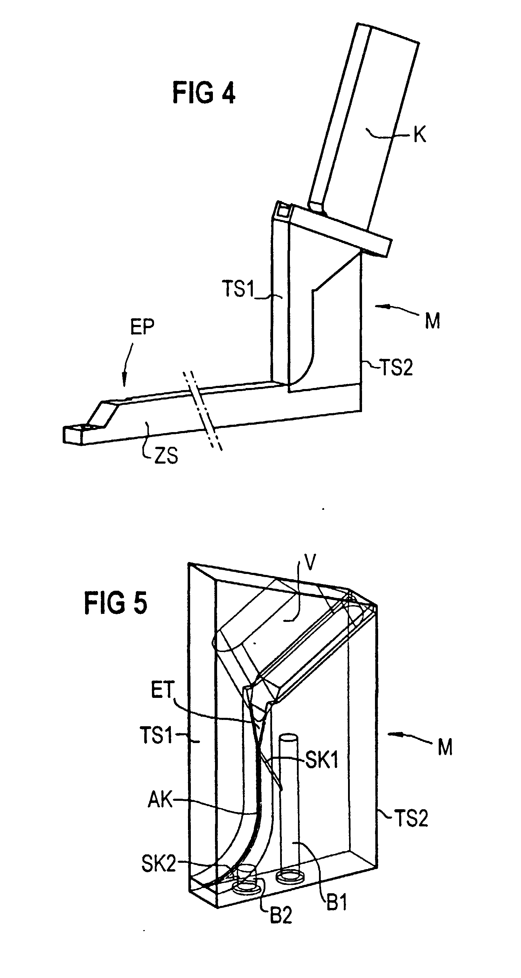

Figur 4 zeigt in perspektivischer Darstellung eine Vorrichtung zum Speichern und Vereinzeln von als Schüttgut aufnehmbaren Teilen, bei welcher die Vereinzelung der Teile nach dem in den Figuren 1 bis 3 dargestellten Prinzip abläuft. Figur 5 zeigt in Detail ein aus zwei Teilstücken TS1 und TS2 zusammengesetztes Modul M der in Figur 4 dargestellten Vorrichtung, welches den eigentlichen Vereinzelungsbereich enthält.

Die zu vereinzelnden Teile T (vergleiche Figuren 2 und 3) werden in einer Kassette K angeliefert, die so auf der Vorrichtung montiert wird, daß ihr Auslaß dem Vorratsbehälter V zugewandt ist. Bei geöffneten Verschluß der Kassette K gelangen die Teile T somit in den Vorratsbehälter V, der in Figur 5 als Hohlraum in dem aus einem transparenten Material bestehenden Teilstück TS1 zu erkennen ist. Der sich an den Vorratsbehälter V anschließende Einlaßtrichter ET und der sich an den Einlaßtrichter ET anschließende Ausrichtkanal AK sind als Ausfräsung in das Teilstück TS2 eingebracht, wobei jeweils die vierte Wand durch das unmittelbar angrenzende Teilstück TS1 gebildet ist. Der Ausrichtkanal AK verläuft zunächst in vertikaler Richtung und schwenkt dann bogenförmig in die horizontale Richtung um.

In das Teilstück TS2 ist eine erste vertikale Bohrung B1 eingebracht, die über einen Stichkanal SK1 zu der im Zusammenhang mit den Figuren 1 und 2 beschriebenen Öffnung O führt. Über die Bohrung B1 wird also gepulste Luft eingeleitet, die eventuell auftretende Staus im Bereich des Einlaßtrichters ET auflöst.

In das Teilstück TS2 ist ferner eine zweite vertikale Bohrung B2 eingebracht, die über einen zweiten Stichkanal SK2 in den Ausrichtkanal AK einmündet. Über die Bohrung B2 wird Luft eingeleitet, welche zur Förderung der Teile T (vergleiche Figuren 2 und 3) im horizontalen Bereich des Ausrichtkanals AK dient. Dieser horizontale Bereich des Ausrichtkanals AK verläuft in einer in Figur 1 dargestellten Zuführschiene ZS. Im vorderen Bereich dieser Zuführschiene ZS befindet sich am Ende des hier nicht näher erkennbaren Ausrichtkanals AK eine Entnahmeposition EP für die Teile T. An dieser Entnahmeposition EP können die vereinzelten Teile nacheinander von der Saugpipette eines Bestückkopfes aufgenommen und auf einer zu bestückenden Leiterplatte in der vorgesehenen Bestückposition abgesetzt werden.

## Patentansprüche

1. Vorrichtung zum Speichern und Vereinzeln von als Schüttgut aufnehmbaren Teilen (T), insbesondere von kubischen oder zylindrischen elektronischen Bauteilen, mit
- einem Vorratsbehälter (V) zur Aufnahme des Schüttguts und
- einem sich an den Auslaß des Vorratsbehälters (V) anschließenden, im Querschnitt den Teilen angepaßten Ausrichtkanal (AK), durch welchen die Teile (T) nacheinander und lagegerecht transportierbar sind, wobei der Auslaßbereich des Vorratsbehälters (V) einen Einlaßtrichter (ET) für den Ausrichtkanal (AK) bildet, und wobei der Vorratsbehälter stufenlos in den Einlaßtrichter übergeht **dadurch gekennzeichnet**,
- daß der Einlaßtrichter (ET) zwei parallel zueinander ausgerichtete, festehende und mit den angrenzenden Wänden des Ausrichtkanals (AK) in einer Ebene liegende Trichterwände (TW1,TW2) besitzt.

2. Vorrichtung nach Anspruch 1,
**dadurch gekennzeichnet**,
daß im Einlaßbereich des Ausrichtkanals (AK) eine Öffnung (O) vorgesehen ist, durch welche zur Beseitigung eines Staus der Teile (T) ein Gas einleitbar ist.

3. Vorrichtung nach Anspruch 1 oder 2,
**dadurch gekennzeichnet**,
daß der Einlaßtrichter (ET) vertikal ausgerichtet ist.

4. Vorrichtung nach einem der Ansprüche 1 bis 3,
**dadurch gekennzeichnet**,
daß der Einlaßbereich des Ausrichtkanals (AK) in vertikaler Richtung verläuft.

## Claims

1. Apparatus for storing and separating parts (T) which can be accommodated as bulk material, in particular cubic or cylindrical electronic components, having
- a storage container (V) for accommodating the bulk material and
- an aligning channel (AK) which adjoins the outlet of the storage container (V), is adapted to the parts in terms of cross section and through which the parts (T) can be transported one after the other in the correct position,
it being the case that the outlet region of the storage container (V) forms an inlet funnel (ET) for the aligning channel (AK), and that the storage container merges steplessly into the inlet funnel, characterized in that the inlet funnel (ET) has two fixed funnel walls (TW1, TW2) which are aligned parallel to one another and are located in a single plane with the adjoining walls of the aligning channel (AK).

2. Apparatus according to Claim 1, characterized in that provided in the inlet region of the aligning channel (AK) is an opening (O) through which a gas can be introduced in order to eliminate any jamming of the parts (T).

3. Apparatus according to Claim 1 or 2, characterized in that the inlet funnel (ET) is aligned vertically.

4. Apparatus according to one of Claims 1 to 3, characterized in that the inlet region of the aligning channel (AK) runs in the vertical direction.

## Revendications

1. Dispositif pour stocker et séparer des pièces (T) pouvant être recues sous forme de produit en vrac, notamment des composants électroniques cubiques ou cylindriques, comportant
- un réservoir (V) de réception du produit en vrac, et
- un canal (AK) d'alignement, se raccordant à la sortie du réservoir (V), adapté à la section transversale des pièces et dans lequel les pièces (T) peuvent être transportées les unes à la suite des autres et en position correcte, la région de sortie du réservoir (V) formant une trémie (ET) d'entrée pour le canal (AK) d'alignement, et le réservoir se raccordant sans gradin à la trémie d'entrée,
**caractérisé** en ce que la trémie (ET) d'entrée possède deux parois (TW1, TW2) de trémie fixes, parallèles entre elles et dans un même plan que les parois attenantes du canal (AK) d'alignement.

2. Dispositif suivant la revendication 1, **caractérisé** en ce qu'il est prévu, dans la région d'entrée du canal (AK) d'alignement, une ouverture (O) par laquelle on peut introduire un gaz afin d'éliminer une accumulation des pièces (T).

3. Dispositif suivant la revendication 1 ou 2, **caractérisé** en ce que la trémie (ET) d'entrée est dirigée verticalement.

4. Dispositif suivant l'une des revendications 1 à 3, **caractérisé** en ce que la région d'entrée du canal (AK) d'alignement s'étend en direction verticale.
